# EUROPÄISCHE PATENTSCHRIFT

(11) **EP 3 847 060 B1**
(45) Veröffentlichungstag und Bekanntmachung des Hinweises auf die Patenterteilung: **29.01.2025**
(21) Anmeldenummer: 19740403.1
(22) Anmeldetag: 22.07.2019
(51) Int. Cl.: B32B 17/10, B60S 1/08, G01N 27/22

(54) **NACHWEISANORDNUNG ZUR KAPAZITIVEN ERFASSUNG EINER PHYSIKALISCHEN GRÖSSE AUF DER INNEN- UND/ODER AUSSENSEITE EINES FAHRZEUG- ODER GEBÄUDEFENSTERS ODER IN DEREN UNMITTELBARER UMGEBUNG**
DETECTION SYSTEM FOR THE CAPACITIVE DETECTION OF A PHYSICAL QUANTITY ON THE INSIDE AND/OR OUTSIDE OF A VEHICLE OR BUILDING WINDOW OR IN ITS IMMEDIATE VICINITY
DISPOSITIF DE DÉTECTION POUR LA DÉTECTION CAPACITIVE D'UNE GRANDEUR PHYSIQUE À L'INTÉRIEUR ET/OU À L'EXTÉRIEUR D'UNE FENÊTRE DE VÉHICULE OU DE BÂTIMENT OU DANS SON ENVIRONNEMENT IMMÉDIAT

(30) Priorität: 03.09.2018 EP 18192153
(43) Veröffentlichungstag der Anmeldung: 14.07.2021
(73) Patentinhaber: Saint-Gobain Glass France, 92400 Courbevoie (FR)
(72) Erfinder: VARGA, Gabor, 52134 Herzogenrath (DE); KLAUSS, Bastian, 52134 Herzogenrath (DE); ZEISS, Michael, 52134 Herzogenrath (DE); EFFERTZ, Christian, 52080 Aachen (DE)
(74) Vertreter: Gebauer, Dieter Edmund
(86) Internationale Anmeldenummer: PCT/EP2019/069655
(87) Internationale Veröffentlichungsnummer: WO 2020/048672

(56) Entgegenhaltungen:
- EP-A1- 1 686 026
- DE-A1- 10 238 168
- DE-A1- 102008 043 610
- US-A- 6 094 981
- US-B1- 6 373 263

## Beschreibung

Die Erfindung betrifft eine Nachweisanordnung zur kapazitiven Erfassung einer physikalischen Größe auf der Innen- und/oder Außenseite eines Fahrzeug- oder Gebäudefensters oder in deren unmittelbarer Umgebung.

In Kraftfahrzeugen und bei Gebäuden spielt die Erfassung von Zuständen oder Parametern der Umgebung für den sicheren und effizienten Betrieb eine immer größere Rolle. Moderne PKWs ebenso wie hochwertige Gebäude sind daher mit einer Vielzahl von Sensoren ausgestattet, die relevante Umgebungszustände oder -parameter erfassen und die aktuellen Werte an Verarbeitungs- und Steuereinheiten liefern, die Funktionen des Fahrzeugs oder Gebäudes steuern. Dies gilt im Übrigen nicht nur für Kraftfahrzeuge, sondern in gewissem Maße auch für bestimmte Wasserfahrzeuge.

Gewisse Sensoren lassen sich vorteilhaft auf oder in der Frontscheibe oder ggf. auch der Heckscheibe oder einer Glasdacheinheit eines PKW unterbringen. Entsprechende Anordnungen sind seit langem für sog. Regensensoren bekannt, über die Scheibenwischerfunktionen des Fahrzeugs gesteuert werden. Im Rahmen des allgemeinen Trends zur weitestgehend kompletten Vorfertigung von Fahrzeugkomponenten gibt es Entwicklungen, die auf eine Integration entsprechender Sensoren in eine vorgefertigte Verglasungseinheit (etwa Front- oder Heckscheibe) eines Fahrzeugs abzielen. Entsprechende Lösungen sind in der unveröffentlichten europäischen Patentanmeldung Nr. 17192877.3 erwähnt. Fahrzeugscheiben mit integrierten oder teil-integrierten Sensoren sind im Übrigen aus der EP 2 121 308 B1 oder der CN 101 087 135 A bekannt.

Die insbesondere als sog. "Regen-Sensoren" (oder auch als Touch-Sensoren) weitverbreiteten kapazitiven Sensoren beruhen in ihrer Funktion auf der Erzeugung eines elektrischen Feldes zwischen zwei mit Abstand voneinander auf einem Substrat angeordneten Elektroden und dessen Beeinflussung durch die zu messende physikalische Größe. Deren Einfluss wird jedoch durch Störeffekte oftmals in hohem Maße verfälscht. Insbesondere ist das Messsignal solcher Sensoren stark abhängig von der Permittivität (dielektrischen Leitfähigkeit) des Substrats, welche wiederum eine deutliche Temperaturabhängigkeit zeigt. Aufgrund dessen muss man entweder eine begrenzte Aussagekraft der Sensorsignale hinnehmen oder aufwändige zusätzliche Mess- und Verarbeitungseinrichtungen zur parallelen und/oder nachträglichen Kompensation der Störeffekte vorsehen. Dies erhöht selbstverständlich den Aufwand in einer entsprechenden Nachweisanordnung und somit deren Kosten.

EP 1686026 A1 zeigt eine Sensoranordnung mit zwei Kondensatorelektroden auf einer Seite einer Zwischenschicht sowie einer Abschirmelektrode auf der anderen Seite der Zwischenschicht. DE 102008043610 A1 zeigt eine Scheibe mit einem durch zwei Kondensatoren gebildeten Sensorelement und einer mit Erde verbundenen Abschirmelektrode.

Ausgehend vom Stand der Technik, ist es Aufgabe der Erfindung, eine entsprechend verbesserte Nachweisanordnung bereitzustellen.

Diese Aufgabe wird durch eine Nachweisanordnung mit den Merkmalen des Anspruchs 1 gelöst. Zweckmäßige Fortbildungen des Erfindungsgedankens sind Gegenstand der jeweiligen abhängigen Ansprüche.

Im Zusammenhang mit der Erfindung ist unter einer "Verglasungseinheit" im allgemeinen Sinne ein Produkt zu verstehen, welches zum Verschließen von Fensteröffnungen eines Fahrzeuges oder Gebäudes direkt (rahmenlos) oder nach Einfügung in einen geeigneten Rahmen eingesetzt werden kann. Bei modernen Kraftfahrzeugen wird es sich hierbei in der Regel um Verbundglasscheiben und bei Neubauten in mittleren und nördlichen Breiten um Isolierverglasungen handeln, die Erfindung ist aber nicht auf solche beschränkt. Vielmehr kann sie auch bei einfachen Einscheiben-Verglasungseinheiten oder Mehrscheiben-Verglasungseinheiten eingesetzt werden, die einen besonderen Aufbau haben, etwa bei Verglasungseinheiten für gepanzerte Fahrzeuge oder für explosionsgeschützte Räume. Die Scheiben der Verglasungseinheit müssen auch nicht notwendigerweise aus Glas bestehen, sondern mindestens ein Teil hiervon kann auch aus einem transparenten Kunststoff, etwa Polykarbonat, gefertigt sein.

Unter einem kapazitiven Sensor ist hier in einem allgemeinen Sinne ein solcher zu verstehen, dessen Funktion auf der Erzeugung und dem Nachweis von Änderungen eines elektrischen Feldes durch die relevante physikalische Größe beruht und bei dem das Nachweisergebnis durch die Permittivität eines Substrats des Sensors beeinflusst wird. In einer in der Automobiltechnik praktisch besonders wichtigen Anwendung handelt es sich hierbei um einen Feuchtigkeits- bzw. "Regen"-Sensor, ein kapazitiver Sensor kann aber auch zum Nachweis anderer Größen in oder an einem Fahrzeug oder Gebäude genutzt werden.

Die Erfindung schließt zunächst den Gedanken einer bewussten Abkehr von der üblichen Praxis der nachträglichen rechnerischen Kompensation von Leitfähigkeits- bzw. Temperatureinflüssen bei den Signalen eines kapazitiven Sensors ein. Sie schließt weiterhin den Gedanken ein, stattdessen eine unmittelbar an der Sensoranordnung wirkende physikalische Kompensation vorzunehmen. Weiterhin schließt die Erfindung den Gedanken ein, diese sensor-inhärente Kompensation mittels einer zusätzlichen Elektrode und des Aufbaus eines zusätzlichen elektrischen Feldes vorzunehmen, welches das Sensorsubstrat durchsetzt und somit in gleicher Weise von der Permittivität des Substrats und deren Änderungen beeinflusst wird wie das eigentliche Messsignal.

Die Erfindung ermöglicht es, mit geringem zusätzlichen Aufwand bei der Herstellung der Sensoreinrichtung erheblichen Aufwand für eine nachträgliche Signalkompensation in der Nachweisanordnung und die entsprechenden Kosten zu sparen. Zudem ist die direkte, sensor-inhärente Kompensation einer nachträglichen rechnerischen Kompensation prinzipbedingt überlegen und liefert grundsätzlich genauere Ergebnisse.

In einer praktisch wichtigen Ausführung der Erfindung ist die Verglasungseinheit ausgeführt als Verbundglasscheibe, die eine erste und zweite Glasscheibe und eine zwischen diese eingeklebte Polymerfolie aufweist, wobei der erste und zweite Sensorabschnitt auf der Innenoberfläche der ersten Glasscheibe, der ersten Oberfläche der Polymerfolie benachbart, und die Materialeigenschafts-Kompensationselektrode auf der Innenoberfläche der zweiten Glasscheibe, der zweiten Oberfläche der Polymerfolie benachbart, angeordnet sind.

Als eigenschafts-kritischer Teil einer in einer Verbundglasscheibe angebrachten kapazitiven Sensorik wird hierbei die Polymerfolie angesehen, und diese wird bei der vorgeschlagenen Ausführung auf der dem Sensor abgewandten Seite mit der zusätzlichen Elektrode versehen. Bevorzugt erfolgt die Aufbringung der Elektroden des eigentlichen Sensors und der Kompensationselektrode aus technologischen Gründen aber auf die benachbarten (inneren) Glasoberflächen.

Ist hingegen die äußere Glasscheibe der Verbundverglasung derjenige Teil, dessen Permittivität den maßgeblichen Einfluss auf das Kapazitätsmesssignal hat, so ist die Materialeigenschafts-Kompensationselektrode auf der Außenoberfläche dieser Glasscheibe anzubringen. Insgesamt wird darauf hingewiesen, dass bei Mehrschichten-Verglasungen eine ganze Reihe von Möglichkeiten hinsichtlich der jeweils kritischen Schicht(en) bestehen und der Ort der Anbringung der Materialeigenschafts-Kompensationselektrode in Abhängigkeit davon zu wählen ist, die dielektrischen Eigenschaften welcher Schicht(en) durch den Einsatz dieser zusätzlichen Elektrode inhärent kompensiert werden sollen.

In einer anderen Ausführung ist die Verglasungseinheit eine Einscheiben-Verglasungseinheit, wobei der erste und zweite Sensorabschnitt auf der ersten Oberfläche und die Materialeigenschafts-Kompensationselektrode auf der zweiten Oberfläche der einzelnen Glasscheibe angeordnet sind. Hier ist die kritische Sensormaterialkomponente das Glas, und die Sensorabschnitte bzw. die Kompensationselektrode sind auch unmittelbar auf diesem gebildet.

In einer aus derzeitiger Sicht praktisch besonders bedeutsamen Ausführung ist der kapazitive Sensor als Feuchtigkeitssensor zum Abfühlen von Feuchtigkeit auf der Innen- und/oder Außenseite der Verglasungseinheit oder in deren jeweiliger Umgebung ausgebildet.

Wie weiter oben bereits erwähnt, kommen kapazitive Sensoren aber auch zur Erfassung anderer physikalischer Größen zum Einsatz, und auch für solche weiteren Einsatzzwecke ist die Erfindung nutzbringend einsetzbar.

Technologisch sind aus derzeitiger Sicht Ausführungen bevorzugt, bei denen der erste und zweite Sensorabschnitt und/oder die Materialeigenschafts-Kompensationselektrode eine auf die jeweilige Oberfläche der Glasscheibe oder Polymerfolie oder auf eine zu dieser benachbarte Oberfläche einer anderen Komponente aufgedruckte oder aufgeklebte Leiterstruktur aufweist. Speziell kann hierbei die aufgedruckte oder aufgeklebte Leiterstruktur mindestens abschnittsweise transparent ausgeführt sein.

Die vorgeschlagene Nachweisanordnung umfasst neben einer Verglasungseinheit, wie sie vorstehend beispielhaft erläutert ist, eine Spannungsversorgungseinheit und eine Auslese- und Auswertungseinrichtung. Die Spannungsversorgungseinheit ist mit dem zweiten Sensorabschnitt des kapazitiven Sensors sowie mit der Materialeigenschafts-Kompensationselektrode verbunden und zur Beaufschlagung des zweiten Sensorabschnitts und der Materialeigenschafts-Kompensationselektrode mit dem gleichen Potential ausgebildet. Die Auslese- und Auswertungseinrichtung ist zum Auslesen eines Kapazitätssignals aus dem zweiten Sensorabschnitt des kapazitiven Sensors und zur Verarbeitung dieses Signals zur Bestimmung eines Wertes der physikalischen Größe ausgebildet.

Die Auslese- und Auswertungseinrichtung ist so ausgestaltet, dass sie auch ein Spannungssignal bzw. eine Spannungsänderung berücksichtigen kann, welche/s von der Materialeigenschafts-Kompensationselektrode auf der gegenüberliegenden Seite der relevanten Materialschicht herrührt und das/die die Änderung von deren relevanter Materialeigenschaft (insbesondere der Permittivität) reflektiert.

Vorteile und Zweckmäßigkeiten der Erfindung ergeben sich im Übrigen aus der nachfolgenden Beschreibung von Ausführungsbeispielen der Erfindung anhand der Figuren. Von diesen zeigen:
- Fig. 1: eine erste Ausführungsform der Verglasungseinheit in einer schematischen Querschnittsdarstellung;
- Fig. 2: eine zweite Ausführungsform der Verglasungseinheit in einer schematischen Querschnittsdarstellung;
- Fig. 3: eine schematische Darstellung einer Ausführungsform der erfindungsgemäßen Nachweisanordnung in Art eines Blockschaltbildes.

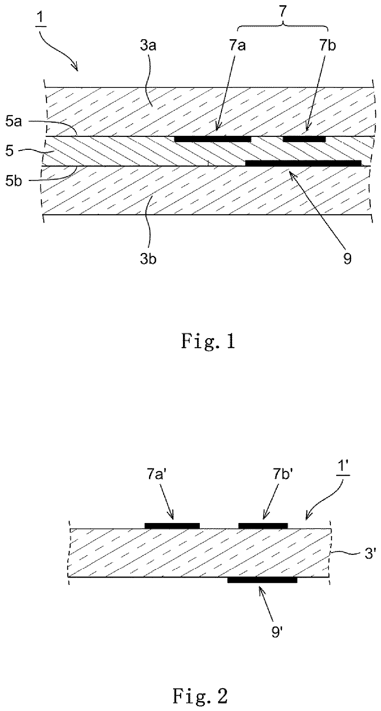

Fig. 1 zeigt schematisch in einer Ausschnittdarstellung eine als Verbundglasscheibe ausgeführte Verglasungseinheit 1, wie sie etwa als Frontscheibeneinheit eines PKW Anwendung finden kann. Die Verglasungseinheit 1 umfasst eine erste (äußere) Glasscheibe 3a und eine zweite (innere) Glasscheibe 3b und eine zwischen diese (mit nicht gesondert bezeichneten Klebstoffschichten) eingeklebte PVB-Folie 5.

Im dargestellten Bereich ist die Verglasungseinheit 1 mit einem Feuchtigkeitssensor 7 versehen, der einen ersten Sensorabschnitt 7a und einen zweiten Sensorabschnitt 7b umfasst. Die Sensorabschnitte 7a, 7b sind hier rein symbolisch dargestellt. Da derartige kapazitive Feuchtigkeitssensoren seit Langem bekannt und in massenhaftem Gebrauch sind, sind sie dem Fachmann im Detail bekannt und bedürfen daher hier keiner genaueren Beschreibung.

In der Figur ist zu erkennen, dass der erste und zweite Sensorabschnitt 7a, 7b zwischen einer ersten Oberfläche 5a der PVB-Folie 5 und der Innenoberfläche der benachbarten Glasscheibe 3a angeordnet sind. In der Praxis weisen die Sensoren typischerweise auf die jeweilige Glasoberfläche aufgedruckte oder aufgeklebte Leiterstrukturen auf. Je nach konkreter Ausführung der Verglasungseinheit mit integrierter Sensorik können die Leiterzüge zumindest teilweise transparent ausgeführt sein, beispielsweise aus ITO (Indiumzinnoxid) oder transparenten metallischen Silberschichten oder leitfähigen Polymeren. Dem zweiten Sensorabschnitt 7b gegenüberliegend und dessen Fläche überdeckend, ist auf der Innenseite der zweiten Glasscheibe 3b und somit auf der zweiten Oberfläche 5b der PVB-Folie 5 liegend eine Materialeigenschafts-Kompensationselektrode 9 angebracht.

Diese zusätzliche Elektrode wird im Betrieb des Feuchtigkeitssensors 7 auf gleiches Potential gelegt wie der zweite Sensorabschnitt 7b des Feuchtigkeitssensors 7, der bei diesem als Signalerfassungsabschnitt wirkt. Soweit zwischen den Sensorabschnitten 7a, 7b ein in üblicher Weise ausgebildetes elektrisches Feld die PVB-Folie 5 durchsetzt, werden Änderungen der elektrischen Eigenschaften, speziell der Permittivität, der PVB-Folie (etwa in Folge von Temperaturänderungen) dadurch sensor-inhärent kompensiert, dass auch zwischen dem ersten Sensorabschnitt 7a und der Materialeigenschafts-Kompensationselektrode 9 ein elektrisches Feld ausgebildet wird und dieses in gleicher Weise durch die Änderung der Permittivität der PVB-Folie beeinflusst wird wie das Feld zwischen den Sensorabschnitten 7a, 7b.

Es wird darauf hingewiesen, dass die oben gegebene Spezifikation der Sensoren 7a, 7b lediglich beispielhaft ist und das Vorsehen von jeweils zugeordneten Abschirmelektroden bzw. -flächen auch für kapazitive Sensoren mit anderer Erfassungsfunktion und, noch allgemeiner, auch für andersartige Sensoren sinnvoll sein kann, die durch Änderungen der elektrischen Eigenschaften eines Sensorsubstrats im Betrieb der Sensoreinrichtung beeinflusst werden.

Fig. 2 zeigt eine gegenüber der ersten Ausführung abgewandelte Ausführung, und zwar bei einer Einscheiben-Verglasungseinheit 1', wie sie im Fahrzeugbau bei Seitenscheiben oder in der Bautechnik beispielsweise bei Innenscheiben von Gebäuden oder bei Außenscheiben von Gebäuden in subtropischen oder tropischen Regionen zum Einsatz kommen kann. Die Verglasungseinheit 1' umfasst hier eine einzelne Glasscheibe 3', und auf deren beide Oberflächen sind Sensorabschnitte 7a', 7b' und Materialeigenschafts-Kompensationselektrode 9' mit den oben erläuterten Funktionen bzw. Spezifikationen aufgebracht.

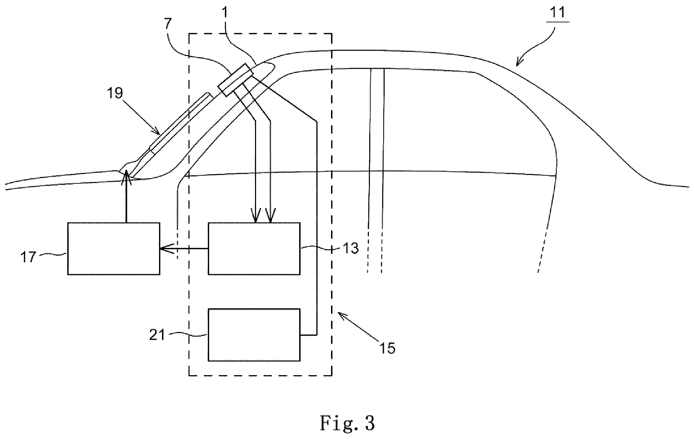

Fig. 3 zeigt schematisch, dass eine Verglasungseinheit 1 der in Fig. 1 gezeigten Art mit integrierter Sensorik 7 in einem Fahrzeug 11 zusammen mit einer Auswertungseinheit 13 eine Feuchtigkeits-Nachweisanordnung 15 bildet. Die Nachweisordnung 15 ist ausgangsseitig mit einer Scheibenwischer-Steuereinheit 17 verbunden, welche in Abhängigkeit von den erfassten Feuchtigkeitssignalen in an sich bekannter Weise die Scheibenwischer 19 des Fahrzeugs 11 steuert.

Die Nachweisanordnung 15 umfasst erfindungsgemäß eine speziell ausgestaltete Spannungsversorgungseinheit 21, die zur Beaufschlagung des zweiten Sensorabschnitts und der Materialeigenschafts-Kompensationselektrode (siehe Fig. 1) der Sensorik 7 mit dem gleichen Potential ausgebildet ist. Innerhalb der Verglasungseinheit sowie zwischen dieser und der Spannungsversorgungseinheit (beispielsweise im Bereich der Armaturentafel oder des Fahrzeugdaches) sind dazu eine erste Anschlussleitung zum Anschluss des ersten Sensorabschnitts an ein erstes Versorgungspotential sowie eine zweite Anschlussleitung zum gemeinsamen Anschluss des zweiten Sensorabschnitts und der Materialeigenschafts-Kompensationselektrode an ein zweites Versorgungspotential vorgesehen. Die Versorgungspotentiale im einfachsten Fall zeitlich konstant, können aber in Abhängigkeit von einem speziellen Sensoraufbau und speziellen Sensorfunktionen erforderlichenfalls auch eine vorbestimmte zeitliche Abhängigkeit aufweisen. Die innerhalb der Verglasungseinheit können die erste und zweite Anschlussleitung insbesondere als aufgeklebte oder aufgedruckte, insbesondere transparente, Leiter ausgeführt sein.

Die Auswertungseinheit 13 kann zur Berücksichtigung eines von der Materialeigenschafts-Kompensationselektrode herrührenden Spannungssignals in Verbindung mit dem eigentlichen Auslesesignal vom zweiten Sensorabschnitt ausgestaltet sein.

### Bezugszeichenliste

- 1; 1': Verglasungseinheit
- 3a, 3b; 3': Glasscheibe
- 5: PVB-Folie
- 5a, 5b: erste und zweite Oberfläche der PVB-Folie
- 7: Feuchtigkeitssensor (Sensorik)
- 7a, 7b; 7a`, 7b`: erster und zweiter Sensor
- 9; 9": Materialeigenschafts-Kompensationselektrode
- 11: Fahrzeug
- 13: Differential-Auswertungseinheit
- 15: Nachweisanordnung
- 17: Scheibenwischer-Steuereinheit
- 19: Scheibenwischer
- 21: Spannungsversorgungseinheit

## Patentansprüche

1. Nachweisanordnung zur kapazitiven Erfassung einer physikalischen Größe auf der Innen- und/oder Außenseite eines Fahrzeug- oder Gebäudefensters oder in deren unmittelbarer Umgebung, aufweisend:
- eine Verglasungseinheit zur Bildung des Fahrzeug- oder Gebäudefensters, die mindestens eine Glasscheibe oder Polymerfolie aufweist, wobei auf einer ersten Oberfläche der oder einer Glasscheibe oder Polymerfolie ein kapazitiver Sensor angeordnet ist, welcher einen ersten Sensorabschnitt und einen von diesem auf der ersten Oberfläche beabstandeten zweiten Sensorabschnitt umfasst, der als Signalausleseabschnitt wirkt, wobei im Betrieb des Sensors zwischen dem ersten und zweiten Sensorabschnitt ein elektrisches Feld erzeugt wird, das teilweise die Glasscheibe oder Polymerfolie durchdringt, wobei auf der zweiten Oberfläche derselben Glasscheibe oder Polymerfolie, dem zweiten Sensorabschnitt gegenüberliegend, eine Materialeigenschafts-Kompensationselektrode angebracht ist, wobei eine erste Anschlussleitung des ersten Sensorabschnitts und eine gemeinsame zweite Anschlussleitung des zweiten Sensorabschnitts und der Materialeigenschafts-Kompensationselektrode vorgesehen sind,
- eine mit dem zweiten Sensorabschnitt des kapazitiven Sensors sowie der Materialeigenschafts-Kompensationselektrode verbundene Spannungsversorgungseinheit, die zur Beaufschlagung des zweiten Sensorabschnitts und der Materialeigenschafts-Kompensationselektrode mit dem gleichen Potential ausgebildet ist und
- eine Auslese- und Auswertungseinrichtung zum Auslesen eines Kapazitätssignals aus dem zweiten Sensorabschnitt des kapazitiven Sensors und zur Verarbeitung dieses Signals zur Bestimmung eines Wertes der physikalischen Größe, wobei die Auslese- und Auswertungseinrichtung zur Berücksichtigung eines von der Materialeigenschafts-Kompensationselektrode herrührenden Spannungssignals ausgebildet ist.

2. Nachweisanordnung nach Anspruch 1, ausgeführt als Verbundglasscheibe, die eine erste und zweite Glasscheibe und eine zwischen diese eingeklebte Polymerfolie aufweist, wobei der erste und zweite Sensorabschnitt auf der Innenoberfläche der ersten Glasscheibe, der ersten Oberfläche der Polymerfolie benachbart, und die Materialeigenschafts-Kompensationselektrode auf der Innenoberfläche der zweiten Glasscheibe, der zweiten Oberfläche der Polymerfolie benachbart, oder auf der Außenoberfläche der zweiten Glasscheibe angeordnet sind.

3. Nachweisanordnung nach Anspruch 1, ausgeführt als Einscheiben-Verglasungseinheit, wobei der erste und zweite Sensorabschnitt auf der ersten Oberfläche und die Materialeigenschafts-Kompensationselektrode auf der zweiten Oberfläche der einzelnen Glasscheibe angeordnet sind.

4. Nachweisanordnung nach einem der vorangehenden Ansprüche, wobei der kapazitive Sensor als Feuchtigkeitssensor zum Abfühlen von Feuchtigkeit auf der Innen- und/oder Außenseite der Verglasungseinheit oder in deren jeweiliger Umgebung ausgebildet ist.

5. Nachweisanordnung nach einem der vorangehenden Ansprüche, wobei der kapazitive Sensor als Berührungssensor zur Erfassung von Berührungen oder Druckbeaufschlagungen der Innen- und/oder Außenseite der Verglasungseinheit ausgebildet ist.

6. Nachweisanordnung nach einem der vorangehenden Ansprüche, wobei der erste und zweite Sensorabschnitt und/oder die Materialeigenschafts-Kompensationselektrode und die optional vorgesehene erste und zweite Anschlussleitung eine auf die jeweilige Oberfläche der Glasscheibe oder Polymerfolie oder auf eine zu dieser benachbarte Oberfläche einer anderen Komponente aufgedruckte oder aufgeklebte Leiterstruktur aufweist.

7. Nachweisanordnung nach Anspruch 6, wobei die aufgedruckte oder aufgeklebte Leiterstruktur mindestens abschnittsweise transparent ausgeführt ist.

8. Fahrzeug mit einer Nachweisanordnung nach einem der Ansprüche 1 bis 7.

## Claims

1. Detection arrangement for capacitive detection of a physical variable on the inside and/or the outside of a vehicle window or building window or in its immediate environment, comprising:
- a glazing unit for forming the vehicle window or building window, which has at least one glass pane or polymer film, wherein a capacitive sensor is arranged on a first surface of the or a glass pane or polymer film, which sensor comprises a first sensor section and a second sensor section spaced at a distance therefrom on the first surface, which second sensor section acts as a signal readout section, wherein during operation of the sensor, an electrical field is generated between the first and second sensor section, which field partially penetrates the glass pane or polymer film, wherein a material property compensation electrode is provided on the second surface of the same glass pane or polymer film, opposite the second sensor section, wherein a first connecting line of the first sensor section and a common second connecting line of the second sensor section and of the material property compensation electrode are provided,
- a voltage supply unit connected to the second sensor section of the capacitive sensor and to the material property compensation electrode, which is designed for applying the same potential to the second sensor section and to the material property compensation electrode, and
- a readout and evaluation device for reading a capacitance signal from the second sensor section of the capacitive sensor and for processing the signal to determine a value of the physical variable, wherein the readout and evaluation device is implemented to take into account a voltage signal originating from the material property compensation electrode.

2. Detection arrangement according to claim 1, implemented as a composite glass pane, which has a first and second glass pane and a polymer film bonded therebetween, wherein the first and second sensor section are arranged on the inner surface of the first glass pane, adjacent the first surface of the polymer film, and the material property compensation electrode is arranged on the inner surface of the second glass pane, adjacent the second surface of the polymer film, or on the outer surface of the second glass pane.

3. Detection arrangement according to claim 1, implemented as a single-pane glazing unit, wherein the first and second sensor section are arranged on the first surface and the material property compensation electrode is arranged on the second surface of the single glass pane.

4. Detection arrangement according to one of the preceding claims, wherein the capacitive sensor is implemented as a moisture sensor for sensing moisture on the inside and/or the outside of the glazing unit or its respective environment.

5. Detection arrangement according to one of the preceding claims, wherein the capacitive sensor is implemented as a touch sensor for detecting touches or the application of pressure on the inside and/or the outside of the glazing unit.

6. Detection arrangement according to one of the preceding claims, wherein the first and second sensor section and/or the material property compensation electrode and the optionally provided first and second connecting line have a conductor structure printed or glued onto the respective surface of the glass pane or polymer film or onto a surface of another component adjacent thereto.

7. Detection arrangement according to claim 6, wherein the printed or glued-on conductor structure is transparent at least in sections.

8. Vehicle with a detection arrangement according to one of the claims 1 through 7.

## Revendications

1. Dispositif de détection pour la détection capacitive d'une grandeur physique à l'intérieur et/ou à l'extérieur d'une fenêtre de véhicule ou d'une fenêtre de bâtiment ou dans son environnement immédiat, comprenant :
- une unité de vitrage pour former la fenêtre du véhicule ou du bâtiment, qui comporte au moins une vitre ou un film polymère, dans laquelle un capteur capacitif est disposé sur une première surface de la ou une vitre ou du film polymère, lequel capteur comprend une première section de capteur et une deuxième section de capteur espacées l'une de l'autre sur la première surface, laquelle deuxième section de capteur agit comme une section de lecture de signal, dans laquelle, pendant le fonctionnement du capteur, un champ électrique est généré entre la première et la deuxième section de capteur, lequel champ pénètre partiellement la vitre ou le film polymère, une électrode de compensation des propriétés du matériau étant prévue sur la deuxième surface de la même vitre ou du même film polymère, à l'opposé de la deuxième section du capteur, une première ligne de connexion de la première section du capteur et une deuxième ligne de connexion commune de la deuxième section du capteur et de l'électrode de compensation des propriétés du matériau étant prévues,
- une unité d'alimentation en tension connectée à la deuxième section du capteur capacitif et à l'électrode de compensation des propriétés du matériau, conçue pour appliquer le même potentiel à la deuxième section du capteur et à l'électrode de compensation des propriétés du matériau, et
- un dispositif de lecture et d'évaluation pour lire un signal de capacité provenant de la deuxième section du capteur capacitif et pour traiter le signal afin de déterminer une valeur de la variable physique, le dispositif de lecture et d'évaluation étant mis en oeuvre pour prendre en compte un signal de tension provenant de l'électrode de compensation des propriétés du matériau.

2. Dispositif de détection selon la revendication 1, mis en oeuvre sous la forme d'une vitre composite, qui comporte une première et une seconde vitre et un film polymère collé entre elles, dans lequel la première et la seconde section du capteur sont disposées sur la surface intérieure de la première vitre, à côté de la première surface du film polymère, et l'électrode de compensation des propriétés du matériau est disposée sur la surface intérieure de la seconde vitre, à côté de la seconde surface du film polymère, ou sur la surface extérieure de la seconde vitre.

3. Dispositif de détection selon la revendication 1, mis en oeuvre en tant que vitrage simple, dans lequel la première et la deuxième section de capteur sont disposées sur la première surface et l'électrode de compensation des propriétés du matériau est disposée sur la deuxième surface du vitrage simple.

4. Dispositif de détection selon l'une des revendications précédentes, dans lequel le capteur capacitif est utilisé comme capteur d'humidité pour détecter l'humidité à l'intérieur et/ou à l'extérieur du vitrage ou dans son environnement respectif.

5. Dispositif de détection selon l'une des revendications précédentes, dans lequel le capteur capacitif est mis en oeuvre en tant que capteur tactile pour détecter les contacts ou l'application d'une pression sur l'intérieur et/ou l'extérieur de l'unité de vitrage.

6. Dispositif de détection selon l'une des revendications précédentes, dans lequel la première et la deuxième section du capteur et/ou l'électrode de compensation des propriétés du matériau et la première et la deuxième ligne de connexion éventuellement prévues ont une structure conductrice imprimée ou collée sur la surface respective de la vitre ou du film polymère ou sur une surface d'un autre composant adjacent à celle-ci.

7. Dispositif de détection selon la revendication 6, dans lequel la structure conductrice imprimée ou collée est transparente au moins en partie.

8. Véhicule équipé d'un dispositif de détection selon l'une des revendications 1 à 7.
